# EUROPEAN PATENT APPLICATION

(11) **EP 4 123 155 A1**
(43) Date of publication of application: **25.01.2023**
(21) Application number: 22185807.9
(22) Date of filing: 19.07.2022
(51) Int. Cl.: F02K 3/06, F02C 7/36

(54) **HIGH AND LOW SPOOL CONFIGURATION FOR A GAS TURBINE ENGINE**

(30) Priority: 19.07.2021 US 202117379291
(71) Applicant: Raytheon Technologies Corporation, Farmington, CT 06032 (US)
(72) Inventor: PIXTON, Stephen G., South Windsor, 06074 (US); FEULNER, Matthew R., West Hartford, 06119 (US); MULDOON, Marc J., Marlborough, 06447 (US); XIAO, Xinwen, Katy, 77450 (US)
(74) Representative: Dehns

(57) **Abstract**

A gas turbine engine (20) includes a fan section (22) that includes a fan (42) with fan blades (42). The fan section (22) drives air along a bypass flow path (B) in a bypass duct (13). A gear reduction (48) is in driving engagement with the fan (42) and has a gear reduction ratio of greater than 3.0 and less than 4.0. A low spool (30) includes a low pressure turbine (46) that drives a low pressure compressor (44) and drives the gear reduction (48) to drive the fan (42) at a speed slower than the low pressure turbine (46). The low pressure compressor (44) is a five-stage low pressure compressor (44). The low pressure turbine (46) is four-stage low pressure turbine (46). A high spool (32) includes a high pressure turbine (54) that drives a high pressure compressor (52). The high pressure compressor (52) is a nine-stage high pressure compressor. The high pressure turbine (54) is a two-stage high pressure turbine.

## Description

### BACKGROUND

This application relates to a gas turbine engine with a gear reduction between a low pressure compressor and a fan. Gas turbine engines are known, and typically include a fan delivering air into a bypass duct as bypass air. The air is also delivered into a compressor. The compressed air is delivered into a combustor where it is mixed with fuel and ignited. Products of this combustion pass downstream over turbine rotors, driving them to rotate.

The turbine rotors drive the fan and compressor. Typically, there are two turbine rotors and two compressors. A lower pressure turbine rotor drives a lower pressure compressor. Historically the low pressure compressor was fixed to a fan shaft to drive the shaft. However, more recently a gear reduction has been placed between the low pressure compressor and the fan.

### SUMMARY

In one aspect of the present invention, a gas turbine engine includes a fan section that includes a fan with fan blades. The fan section drives air along a bypass flow path in a bypass duct. A gear reduction is in driving engagement with the fan and has a gear reduction ratio of greater than 3.0 and less than 4.0. A low spool includes a low pressure turbine that drives a low pressure compressor and drives the gear reduction to drive the fan at a speed slower than the low pressure turbine. The low pressure compressor is a five-stage low pressure compressor. The low pressure turbine is four-stage low pressure turbine. A high spool includes a high pressure turbine that drives a high pressure compressor. The high pressure compressor is a nine-stage high pressure compressor. The high pressure turbine is a two-stage high pressure turbine.

In an embodiment according to the previous embodiment, an overall pressure ratio provided by the fan, the low pressure compressor, and the high pressure compressor is greater than 38 and less than 70 at cruise.

In another embodiment according to any of the previous embodiments, an exhaust gas exit temperature of greater than 900 degrees Fahrenheit (482 °C) and less than 1000 degrees Fahrenheit (538 °C) at maximum take-off.

In another embodiment according to any of the previous embodiments, a pressure ratio of the low pressure turbine is greater than 9.5 and less than 12.5 at cruise.

In another embodiment according to any of the previous embodiments, a pressure ratio of the high pressure compressor is greater than 9.0 and less than 11.5 at cruise.

In another embodiment according to any of the previous embodiments, a product of a pressure ratio of the fan and a pressure ratio of the low pressure compressor is greater than 4.5 and less than 6.5 at cruise. The pressure ratio of the fan is measured across a root of one of the fan blades alone at 0% span at cruise.

In another embodiment according to any of the previous embodiments, the gear reduction ratio is greater than 3.2 and less than 4.0.

In another embodiment according to any of the previous embodiments, a ratio of the product of the pressure ratio of the fan and the pressure ratio of the low pressure compressor pressure to a pressure ratio of the high pressure compressor is greater than 0.45 and less than 0.85 at cruise.

In another embodiment according to any of the previous embodiments, a ratio of the product of the pressure ratio of the fan and the pressure ratio of the low pressure compressor pressure to the pressure ratio of the high pressure compressor is greater than 0.45 and less than 0.55 at cruise.

In another embodiment according to any of the previous embodiments, the gear reduction ratio is greater than 3.35 and less than 3.65.

In another embodiment according to any of the previous embodiments, a pressure ratio of the low pressure turbine is greater than 9.5 and less than 12.5 at cruise.

In another embodiment according to any of the previous embodiments, an overall pressure ratio provided by the fan, the low pressure compressor, and the high pressure compressor is greater than 45 and less than 60 at cruise.

This aspect of the present invention also extends to a method of operating a gas turbine engine having the features of any of the above.

In another aspect of the invention, a gas turbine engine includes a fan section that includes a fan with fan blades. The fan section drives air along a bypass flow path in a bypass duct. Gear reduction is in driving engagement with the fan and has a gear reduction ratio of greater than 3.0 and less than 4.0. A low spool includes a low pressure turbine that drives a low pressure compressor and drives the gear reduction to drive the fan at a speed slower than the low pressure turbine. The low pressure compressor is a five-stage low pressure compressor. The low pressure turbine is a four-stage low pressure turbine. A high spool includes a high pressure turbine that drives a high pressure compressor. The high pressure compressor is a nine-stage high pressure compressor with a pressure ratio of greater than 9.0 and less than 11.5 at cruise. The high pressure turbine is a two-stage high pressure turbine.

In an embodiment according to the previous embodiment, an exhaust gas exit temperature of greater than 900 degrees Fahrenheit (482 °C) and less than 1000 degrees Fahrenheit (538 °C) at maximum take-off.

In another embodiment according to any of the previous embodiments, an overall pressure ratio provided by the fan, the low pressure compressor, and the high pressure compressor is greater than 45 and less than 60 at cruise.

In another embodiment according to any of the previous embodiments, a pressure ratio of the low pressure turbine is greater than 9.5 and less than 12.5 at cruise.

In another embodiment according to any of the previous embodiments, a product of a pressure ratio of the fan and a pressure ratio of the low pressure compressor is greater than 4.5 and less than 6.5 at cruise. The pressure ratio of the fan is measured across a root of one of the fan blades alone at 0% span at cruise.

In another embodiment according to any of the previous embodiments, the gear reduction ratio is greater than 3.2 and less than 4.0.

In another embodiment according to any of the previous embodiments, a ratio of the product of the pressure ratio of the fan and the pressure ratio of the low pressure compressor pressure to the pressure ratio of the high pressure compressor is greater than 0.45 and less than 0.85 at cruise. The gear reduction ratio is greater than 3.35 and less than 3.65.

In another embodiment according to any of the previous embodiments, the ratio of the product of the pressure ratio of the fan and the pressure ratio of the low pressure compressor pressure to the pressure ratio of the high pressure compressor is greater than 0.45 and less than 0.55 at cruise.

This aspect of the present invention also extends to a method of operating a gas turbine engine having the features of any of the above.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 shows a gas turbine engine according to this disclosure.
Figure 2 schematically illustrates a low spool and a high spool.

### DETAILED DESCRIPTION

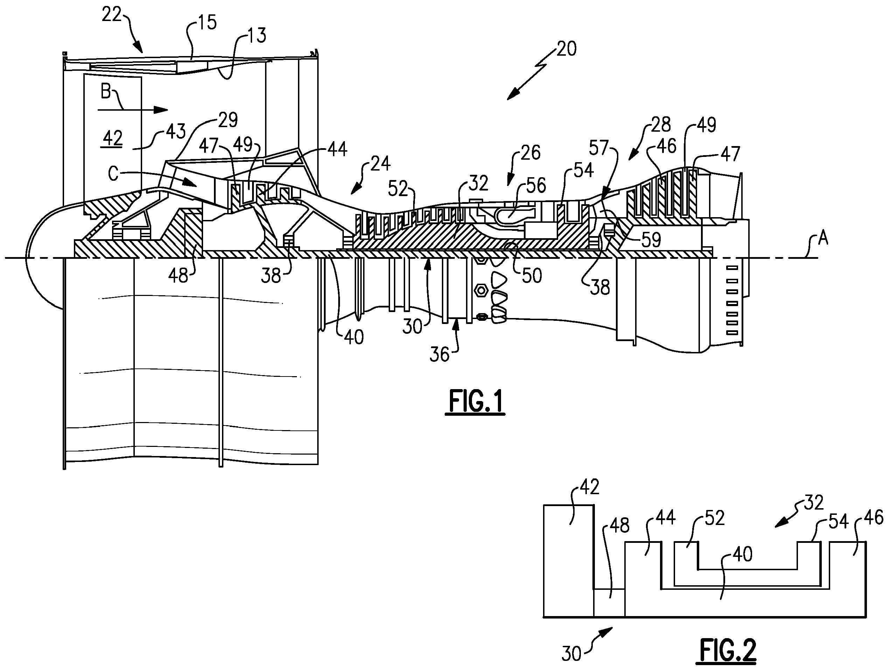

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (101.6 cm), or more narrowly no more than 75 inches (190.5cm). For example, the maximum radius of the fan blades 43 can be between 45 inches (114.3cm) and 60 inches (152.4cm), such as between 50 inches (127cm) and 55 inches (139.7cm). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a product of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 7.0 and 12.0, or more narrowly is between 10.0 and 11.5. The OPR can be equal to or greater than 44.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 °C). The TET may be greater than or equal to 2700.0 °F (1482 °C), or more narrowly less than or equal to 3500.0 °F (1927 °C), such as between 2750.0 °F (1510 °C) and 3350.0 °F (1843 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (540 °C), or more narrowly greater than or equal to 800.0 °F (427 °C), such as between 900.0 °F (482 °C) and 975.0 °F (524 °C). The relatively low EGT can be utilized in combination with the other techniques disclosed herein to reduce fuel consumption.

Applicant previously designed, manufactured and flew a gas turbine engine with a gear reduction between the low pressure compressor and the fan rotor. A gear ratio of the gear reduction in those engines was 3.06, or lower. This disclosure relates to gas turbine engines with a gear reduction, but also in embodiments with a gear ratio greater than or equal to 3.2, and also in embodiments greater than or equal to 3.4, and less than 4.0.

As schematically illustrated in Figure 2, the low spool 30 includes the fan drive turbine 46 driving the low pressure compressor 44 and the fan 42 through the geared architecture 48 at a slower speed than the low pressure compressor 44. The high spool 32 includes the high pressure turbine 54 driving the high pressure compressor 52. The high spool 32 includes a greater rotational speed than the low spool 30.

In this disclosure, the low speed spool 30 performs an increased amount of work on the air in the core flow path C as compared to Applicant's prior engines. In particular, the table below illustrates five example gas turbine engines according to this disclosure. Engines 1-3 include the fan 42 driven by the geared architecture 48 with a five-stage low pressure compressor 44, a nine-stage high pressure compressor 52, a two-stage high pressure turbine 54, and a four-stage low pressure turbine 46. With the example Engines 1-3, the low pressure compressor 44 includes a greater number of stages that the low pressure turbine 46. In this disclosure, a stage includes a single rotating blade row. The stage may or may not include a corresponding row of vanes.

In the illustrated example, the bypass ratio for Engines 1-3 varies from 9.5 to 16.5 at cruise, or more narrowly from 10.7 to 15.9, or even more narrowly from 13.0 to 16.0 at cruise with the fan pressure ratio varying from greater than 1.30 to less than 1.40 at cruise, or more narrowly from 1.35 to 1.37. The gear reduction ratio varies from greater than 3.0 and less than 4.0, or more narrowly from 3.41 and 3.60. A product of a pressure ratio across the fan 42 at 0% span with a pressure ratio across the low pressure compressor 44 varies from greater than 4.5 to less than 6.5 at cruise, or more narrowly from 5.0 to 5.8. A pressure ratio across the high pressure compressor 52 varies from greater than 9.0 to less than 11.5 at cruise, or more narrowly from 9.9 to 10.3. The high pressure compressor 52 also includes a pressure per stage of greater than 1.22 and less than 1.33 at cruise, or more narrowly from 1.28 to 1.31. One feature of having a pressure per stage in the high pressure compressor 52 within the disclosed ranges is increased aerodynamic efficiency of the blades from a reduction in turning and tip losses.

Applicant's prior engines include two to three low pressure compressor stages, eight high pressure compressor stages, two high pressure turbine stages and three low pressure turbine stages. Additionally, Applicant's prior engines included a bypass ratio from 8.6-12.0 at cruise, a gear reduction ratio of 2.41-3.06, a pressure ratio across the fan and low pressure compressor of 2.5-3.1 at cruise, a high pressure compressor pressure ratio of 13-15 at cruise, a pressure per stage for the high pressure compressor of 1.38-1.40, a low pressure turbine pressure ratio of 5.7-7.0 at cruise, an OPR of 36.3-41.7 at cruise, and an exhaust gas temp at MTO of 1043 to 1094 degrees Fahrenheit (562 to 590 °C).

A work split ratio is defined as a ratio of the product of the pressure ratio across the fan at 0% span with the pressure ratio of the low pressure compressor 44 to the pressure ratio across the high pressure compressor 52. with all pressure ratios being measured at cruise. In the illustrated example, the work split ratio varies from greater than 0.35 to less than 0.90, or more narrowly from 0.4 to 0.8, or even more narrowly from 0.45-0.65, or yet more narrowly from 0.45 to 0.55. The work split ratios for Engines 1-3 occur with overall pressure ratios varying from greater than 38 to less than 70 at cruise, or more narrowly from 48.0 to 58.0, or even more narrowly from 49.3 to 57.8. Applicant's prior engines have a work split from 0.16 to 0.24.

Engines 1-3 maintain a greater work split ratio than Applicant's prior engines indicating an increase in work performed by the low spool 40 as compared to the high spool 32. The low pressure turbine 46 also extracts more power from the hot exhaust gases of the core flow path C for Engines 1-3 with a pressure ratio varying from greater than 9.5 to less than 12.5, or more narrowly from 10.2 to 12.3. Engines 1-3 exhibit improved efficiency with lower exhaust gas temperatures signifying the greater amount of power being extracted from the hot exhaust gases in the core flow path C. In particular, the exhaust gas temperature as defined above at maximum take-off varies from greater than 900 to less than 1000 degrees Fahrenheit (482 to 538 °C), or more narrowly from 905 to 975 degrees Fahrenheit (485 to 524 °C), or even more narrowly from 912 to 972 degrees Fahrenheit (489 to 522 °C).

Unless otherwise stated, all parameters in the below table are measured at cruise.

| | Engine 1 | Engine 2 | Engine 3 |
|---|---|---|---|
| FPR | 1.35 | 1.35 | 1.37 |
| Bypass Ratio | 15.9 | 13.6 | 13.5 |
| Gear Ratio | 3.60 | 3.55 | 3.41 |
| LPC Stage Count | 5 | 5 | 5 |
| LPC (w/ FPR) | 5.8 | 5.0 | 5.0 |
| HPC Stage Count | 9 | 9 | 9 |
| HPC Pressure Ratio | 10.0 | 9.9 | 10.3 |
| HPC Pressure / Stage | 1.29 | 1.29 | 1.30 |
| Work Split Ratio | 0.58 | 0.5 | 0.5 |
| OPR | 57.8 | 49.3 | 51.0 |
| HPT Stage Count | 2 | 2 | 2 |
| LPT Stage Count | 4 | 4 | 4 |
| LPT Pressure Ratio | 12.3 | 10.3 | 10.2 |
| Ex. Gas Temp F (MTO) | 972 | 912 | 960 |
| | (522°C) | (489 °C) | (516°C) |

Although the different non-limiting examples are illustrated as having specific components, the examples of this disclosure are not limited to those particular combinations. It is possible to use some of the components or features from any of the non-limiting examples in combination with features or components from any of the other non-limiting examples.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claim should be studied to determine the true scope and content of this disclosure.

## Claims

1. A gas turbine engine (20) comprising:
a fan section (22) including a fan (42) with fan blades (43), wherein said fan section (22) drives air along a bypass flow path (B) in a bypass duct (13);
a gear reduction (48) in driving engagement with the fan (42) and having a gear reduction ratio of greater than 3.0 and less than 4.0;
a low spool (30) including a low pressure turbine (46) driving a low pressure compressor (44) and driving the gear reduction (48) to drive the fan at a speed slower than the low pressure turbine (46), wherein the low pressure compressor (44) is a five-stage low pressure compressor and the low pressure turbine (46) is four-stage low pressure turbine; and
a high spool (32) including a high pressure turbine (54) driving a high pressure compressor (52), wherein the high pressure compressor (52) is a nine-stage high pressure compressor and the high pressure turbine (54) is a two-stage high pressure turbine.

2. The gas turbine engine (20) of claim 1, wherein an overall pressure ratio provided by the fan (42), the low pressure compressor (44), and the high pressure compressor (52) is greater than 38 and less than 70 at cruise.

3. The gas turbine engine (20) of claim 2, wherein the overall pressure ratio provided by the fan (42), the low pressure compressor (44), and the high pressure compressor (52) is greater than 45 and less than 60 at cruise.

4. The gas turbine engine (20) of claim 1, 2 or 3, wherein an exhaust gas exit temperature of greater than 900 degrees Fahrenheit (482 °C) and less than 1000 degrees Fahrenheit (538 °C) at maximum take-off.

5. The gas turbine engine (20) of any preceding claim, wherein a pressure ratio of the low pressure turbine (46) is greater than 9.5 and less than 12.5 at cruise.

6. The gas turbine engine (20) of any preceding claim, wherein a pressure ratio of the high pressure compressor (52) is greater than 9.0 and less than 11.5 at cruise.

7. The gas turbine engine (20) of any preceding claim, wherein a product of a pressure ratio of the fan (42) and a pressure ratio of the low pressure compressor (44) is greater than 4.5 and less than 6.5 at cruise and the pressure ratio of the fan (42) is measured across a root of one of the fan blades (42) alone at 0% span at cruise.

8. The gas turbine engine (20) of any preceding claim, wherein the gear reduction ratio is greater than 3.2.

9. The gas turbine engine (20)of claim 8, wherein the gear reduction ratio is greater than 3.35 and less than 3.65.

10. The gas turbine engine (20) of any preceding claim, wherein a ratio of the product of the pressure ratio of the fan (42) and the pressure ratio of the low pressure compressor (44) pressure to a pressure ratio of the high pressure compressor (52) is greater than 0.45 and less than 0.85 at cruise.

11. The gas turbine engine (20) of claim 10, wherein the ratio of the product of the pressure ratio of the fan (42) and the pressure ratio of the low pressure compressor (44) pressure to the pressure ratio of the high pressure compressor (52) is less than 0.55 at cruise.
